# EUROPÄISCHE PATENTSCHRIFT

(11) **EP 1 678 009 B1**
(45) Veröffentlichungstag und Bekanntmachung des Hinweises auf die Patenterteilung: **06.02.2008**
(21) Anmeldenummer: 04762449.9
(22) Anmeldetag: 22.07.2004
(51) Int. Cl.: B60R 21/01

(54) **RÜCKHALTESYSTEM FÜR FAHRZEUGINSASSEN**
RETAINING SYSTEM FOR VEHICLE OCCUPANTS
SYSTEME DE RETENUE DES OCCUPANTS D'UN VEHICULE

(30) Priorität: 23.10.2003 DE 10349209
(43) Veröffentlichungstag der Anmeldung: 12.07.2006
(73) Patentinhaber: ROBERT BOSCH GMBH, 70442 Stuttgart (DE)
(72) Erfinder: RECKNAGEL, Rolf-Juergen, 07747 Jena (DE); WELLHOEFER, Matthias, 71701 Schwieberdingen (DE)
(86) Internationale Anmeldenummer: PCT/DE2004/001599
(87) Internationale Veröffentlichungsnummer: WO 2005/044634

(56) Entgegenhaltungen:
- DE-A- 10 062 427
- DE-A- 10 106 311
- DE-A- 19 504 353
- DE-A- 19 911 483

## Beschreibung

### Stand der Technik

Die Erfindung betrifft ein Rückhaltesystem für Fahrzeuginsassen nach dem Oberbegriff des Anspruchs 1. Der Straßenverkehr in dicht besiedelten Gebieten führt zu einer Gefährdung von Fahrzeug und Fahrzeuginsassen durch Seitenaufpralle (side Crash). Diese sind mit einem hohen Verletzungsrisiko für die Insassen verbunden, da nur eine vergleichsweise kurze Knautschzone zur Verfügung steht und die Zeit für das Erkennen einer Gefährdung und die anschließende Aktivierung von Rückhaltemitteln extrem kurz ist. Für die Erkennung von Seitenaufprallen werden bevorzugt Drucksensoren eingesetzt, die den Druck in dem Inneren eines Fahrzeugteils erfassen. Beispielsweise kann der Druck in einem von den Türen des Fahrzeugs umschlossenen Hohlraum gemessen werden. Derartige Drucksensoren erfassen unkritische langsame Druckänderungen während des normalen Fahrbetriebs, die beispielsweise durch Witterungseinflüsse oder Befahren von Straßen mit unterschiedlicher Höhenlage hervorgerufen werden. Weiterhin erfassen die Drucksensoren einen durch einen Aufprall verursachten schnellen Druckanstieg (durch quasi-adiabatische Kompression). Um einen solchen schnellen Druckanstieg unbeeinflusst durch witterungs- oder höhenbedingte Druckänderungen erfassen zu können, wird eine auf den herrschenden Umgebungsdruck bezogene Normierung durchgeführt. Auf diese Weise kann aus dem Signal des Drucksensors ein der Crashgeschwindigkeit in etwa proportionaler Messwert abgeleitet werden. Leider kann auch dieser Messwert nicht zuverlässig genug als Kriterium für einen Seitenaufprall dienen, da er großen Schwankungen unterworfen ist. Aufpralluntersuchungen mit Pendeln und Ergebnisse von Crashtests haben nämlich gezeigt, dass die Stellung der Fensterscheiben des Fahrzeugs einen nicht zu vernachlässigenden Einfluss auf diesen Messwert haben und diesen sogar so stark verfälschen können, dass ein Seitenaufprall nicht mehr zuverlässig zu erkennen ist. Praktische Versuchsergebnisse deuten darauf hin, dass die Amplitude des Ausgangssignals des Drucksensors bei einer völlig geöffneten Fensterscheibe um etwa 10 bis 20% geringer ausfällt als bei geschlossener Scheibe. Dies kann beispielsweise daran liegen, dass bei einer völlig heruntergelassenen Scheibe im Bereich der Dichtlippen ein offener Spalt gebildet wird, der für das Türvolumen eine undichte Stelle darstellt und somit den Polytropenexponent verändert. Dies hat die nachteilige Folge, dass bei dem Anstieg des Drucks infolge eines Seitenaufpralls nicht mehr ein so hoher Amplitudenwert erreicht wird. Weiterhin kann die heruntergelassene Scheibe die Druckeinlassöffnung des Drucksensors verdeckt sein, was zur Folge hat, dass die direkte Druckwelle durch die Scheibe gedämpft wird. Dieser nachteilige Effekt auf das Ausgangssignal des Drucksensors hängt von zahlreichen Parametern ab, wie beispielsweise von den geometrischen Abmessungen der Fahrzeugteile, insbesondere der Tür, dem Volumen der Tür, der Dichtheit der Tür, von Form und Größe der Scheiben, von der Konstruktion und der Alterung der Dichtlippen, sowie von der Lage der Scheibe in der Tür. Als nachteilige Folge stellen sich Probleme bei der Erkennung eines Seitenaufpralls ein. Falls ein Fenster teilweise oder völlig geöffnet wird, ist mit einer wesentlich geringeren Amplitude bei einem Druckanstieg zu rechnen. Dies hat zur Folge, dass ein vorgegebener Schwellwert für die Auslösung von seitlichen Rückhaltemitteln möglicherweise erst zu einem späteren Zeitpunkt erreicht wird. Wegen der schon eingangs genannten Probleme bei einem Seitenaufprall ist es aber für die Sicherheit der Insassen außerordentlich wichtig, möglichst frühzeitig eine Risikobewertung durchzuführen, um eine Entscheidung für die Aktivierung von Rückhaltemitteln treffen zu können. Jede Millisekunde, um die diese kritische Entscheidung verzögert wird, kann das Risiko für die Insassen dramatisch erhöhen. Im Grenzfall kann es sogar vorkommen, dass ein den schwächsten Nichtauslösecrash repräsentierendes Drucksignal infolge einer heruntergelassenen Fensterscheibe so stark reduziert wird, dass es innerhalb der Applikationstoleranz nicht mehr sicher von dem Signal des stärksten Nichtauslösecrashs unterscheidbar ist. Als schwächster Nichtauslösecrash gilt dabei beispielsweise das bei einem Aufprall mit einer Geschwindigkeit von etwa 29 km/h auf eine deformierbare Barriere entstehende Drucksignal. Als stärkster Nichtauslösecrash das bei einem Aufprall mit einer Geschwindigkeit von etwa 19 km/h auf eine deformierbare Barriere entstehende Drucksignal. In Abhängigkeit von der Konstruktion des Fahrzeugs und insbesondere von der Fahrzeugtür kann daher ein Graubereich um die Auslöseschwelle entstehen, in dem mit einem undefinierten Verhalten der für den Seitenschutz vorgesehenen Rückhaltemittel zu rechnen ist. Abgesehen von der Amplitude des Drucksignals wird auch dessen Halbwertsbreite verringert, da aufgrund der undichten Stelle ein schnellerer Druckausgleich mit der Umgebung erfolgt. Auch dies wirkt sich nachteilig auf die Erkennbarkeit eines Seitenaufpralls aus.

Aus DE 101 06 311 A1 ist ein Gerät zum Anbringen an eine Fahrzeugtür bekannt, das in einem Gehäuse Bestandteile eines Antriebs zum Heben und Senken einer Fahrzeugfensterscheibe und Bestandteile einer Sensoreinheit zum Erkennen eines Aufpralls umfasst. Weiterhin umfasst das Gerät einen sogenannten GMR-Sensor zur Messung der Drehzahl eines Elektromotors des Antriebs, über den mittelbar die Lage eines Gelenkantriebs und die Position der Fensterscheibe erfassbar sind. Die Position der Fensterscheibe wird für einen Einklemmschutz ausgewertet.

Aus DE 195 04 353 A1, das die Merkmale des Oberbegriffs des Anspruchs 1 zeigt, ist es bekannt einen Drucksensor in einer Fahrzeugseite zu einer Seitenaufprallerkennung vorzusehen. Dabei ist die Anstiegsgeschwindigkeit des Innendrucks im Wesentlichen proportional zur Verformungs- bzw. Eindruckgeschwindigkeit und ein Maximalwert des Innendrucks im Wesentlichen proportional zur Größe der Verformung bzw. des Eindrückens.

### Vorteile der Erfindung

Die Erfindung geht von der Erkenntnis aus, dass das Ausgangssignal eines für eine Druckmessung vorgesehenen Drucksensors, der zur Erkennung eines Seitenaufpralls auf das Fahrzeug dient, in starkem Masse von der Position eines beweglichen Fahrzeugteils, wie insbesondere einer in einer Fahrzeugtür angeordneten Scheibe, abhängig ist. Je nach Position des beweglichen Fahrzeugteils können sowohl die Amplitude als auch die Form des Ausgangssignals des Drucksensors derart nachteilig verändert sein, dass das Ausgangssignal des Drucksensors nicht mehr hinreichend schnell oder hinreichend genau auswertbar ist, um rechtzeitig auf eine kritische Unfallsituation reagieren zu können. Dieser Nachteil wird durch das Rückhaltesystem mit den Merkmalen des Anspruchs 1 vermieden. Die erfinderische Lösung bietet den großen Vorteil, dass eine sichere Erkennung eines Seitenaufpralls mittels eines Drucksensors praktisch unabhängig von der Position eines beweglichen Teils des Fahrzeugs, wie insbesondere eines Fensters, ermöglicht wird. Ein weiterer Vorteil besteht darin, dass bei der Applikation eines für die Erkennung eines Seitenaufpralls vorgesehenen Drucksensors die Möglichkeit einer durch die Position des verstellbaren Fahrzeugteils hervorgerufenen Signalverringerung nicht mehr durch eine zusätzliche Amplitudentoleranz für das Signal des Drucksensors berücksichtigt werden muss. Daher kann einerseits eine genauere Applikation erfolgen, während andererseits die Auslösezeiten auch im Feld garantiert bleiben, da ein verstellbares Fahrzeugteil, wie insbesondere ein geöffnetes Fenster nicht mehr zu einer Verzögerung bei der Auslösung führt. Durch die Erfassung der Position des verstellbaren Fahrzeugteils mit einem Positionssensor und die Verknüpfung des Ausgangssignals des Positionssensors mit dem Signal des Drucksensors wird eine sichere Auswertung des Drucksignals unabhängig von der Position des verstellbaren Fahrzeugteils ermöglicht. Auf besonders einfache Weise wird die Position beispielsweise eines Fensters in der Fahrzeugtür durch eine auf dem Fenster aufgebrachte Skala ermittelt, die von einem Positionssensor abgetastet wird. Weitere vorteilhaftre Ausgestaltungen und Weiterbildungen der Erfindung ergeben sich aus den übrigen Unteransprüchen.

### Zeichnung

Ausführungsbeispiele der Erfindung werden nachfolgend unter Bezug auf die Zeichnung näher erläutert. Dabei zeigt
- Figur 1: das Blockschaltbild eines erfindungsgemäß ausgestalteten Rückhaltesystems,
- Figur 2: die Scheibe einer Fahrzeugtür mit einem Positionssensor,
- Figur 3: die Scheibe einer Fahrzeugtür mit einem Positionssensor
- Figur 4: ein erstes Ablaufdiagramm,
- Figur 5: ein zweites Ablaufdiagramm.

### Beschreibung der Ausführungsbeispiele

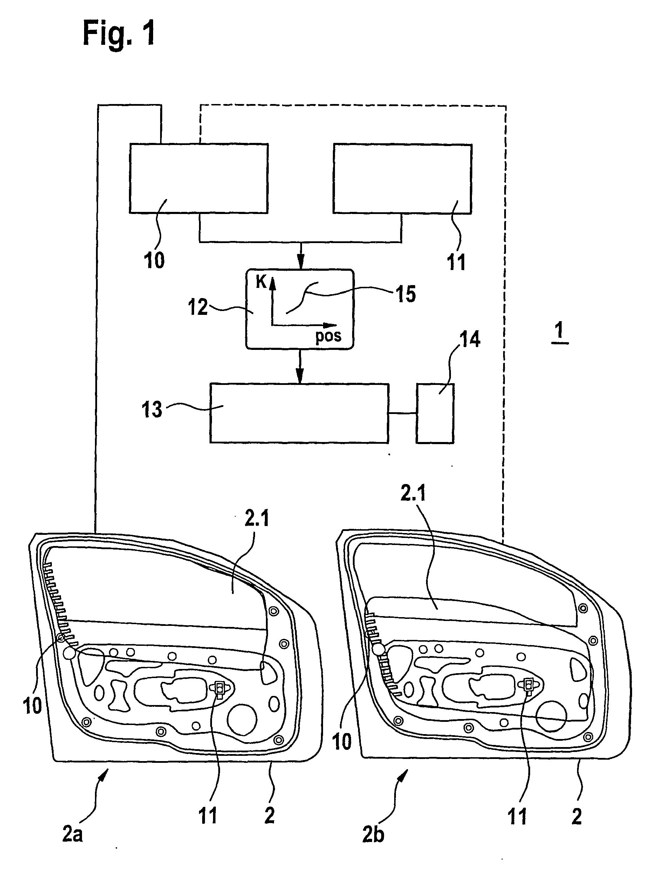

Figur 1 zeigt das Blockschaltbild eines erfindungsgemäß ausgestalteten Rückhaltesystems 1. Das Rückhaltesystem 1 umfasst ein Steuergerät 13, das mit Rückhaltemitteln 14 verbunden ist und diese steuert. Weiterhin umfasst das Rückhaltesystem 1 einen Drucksensor 11, der vorzugsweise im Innern einer Fahrzeugtür 2 angeordnet ist. Dieser Drucksensor 11 nimmt Druckschwankungen auf, die durch einen Seitenaufprall erzeugt werden. Weiterhin umfasst das Rückhaltesystem 1 wenigstens einen Positionssensor 10, der die Position eines beweglichen Teils des Fahrzeugs erfasst. Bei dem beweglichen Teil des Fahrzeugs handelt es sich insbesondere um eine in der Fahrzeugtür 2 angeordnete Scheibe 2.1. Bei dem beweglichen Teil des Fahrzeugs könnte es sich auch um ein Schiebedach oder das Dach eines Kabrioletts handeln, sofern deren Position das Ausgangssignal des Drucksensors 11 beeinflusst. Dieser Positionssensor 10 ist ebenfalls im Innern der Fahrzeugtür 2 angeordnet. In Figur 1 ist die Scheibe 2.1 in zwei unterschiedlichen Positionen 2a und 2b dargestellt. In Position 2a ist die Scheibe 2.1 völlig geschlossen. In Position 2b ist die Scheibe 2.1 vollständig geöffnet. Schließlich umfasst das Rückhaltesystem 1 noch ein Funktionsmodul 12, in dem, vorzugsweise in Gestalt einer Kennlinie 15, Korrekturwerte K als Funktion der Position Pos der Scheibe 2.1 abgelegt sind.

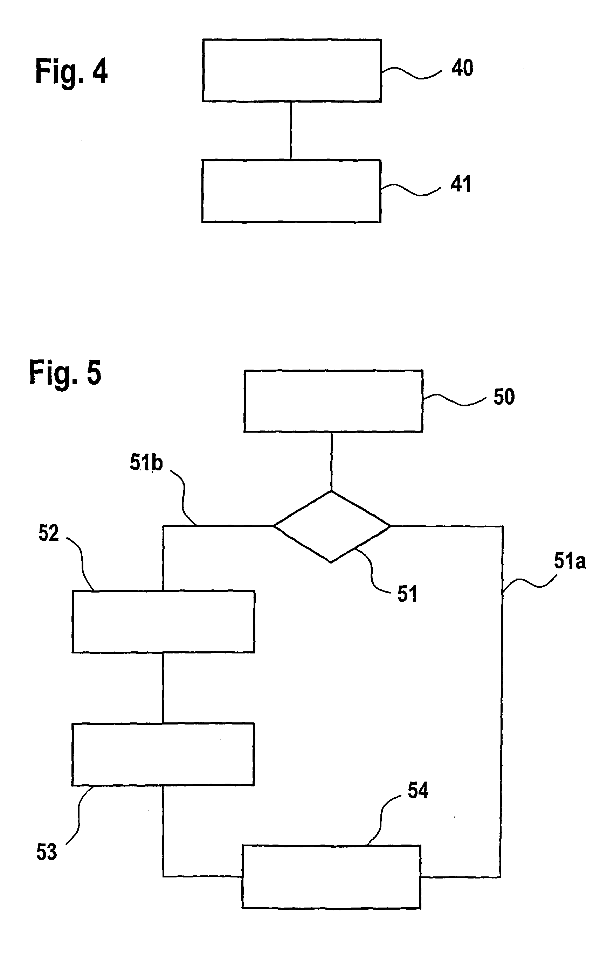

Die Betriebsweise des Rückhaltesystems 1 wird im Folgenden anhand der in Figur 4 und Figur 5 dargestellten Ablaufdiagramme erläutert. Dabei wird zunächst auf eine erste Betriebsphase eingegangen, die auch als "Lernphase" bezeichnet werden kann. Diese erste Betriebsphase wird durch das in Figur 4 dargestellte Ablaufdiagramm erläutert. In einem ersten Schritt 40 wird ermittelt, wie sich die Position Pos der Scheibe 2.1 auf das Ausgangssignal des Drucksensors 11 auswirkt, wenn eine schnelle Druckänderung, beispielsweise durch Kompression des Volumens der Fahrzeugtür 2 stattfindet. Dabei wird zweckmäßig für jeden Türtyp eine Messreihe durchgeführt, in der Drucksignale des Drucksensors 11 in Abhängigkeit von der Position Pos der Scheibe 2.1 ermittelt werden. De Position Pos der Scheibe 2.1 wird dabei durch den Positionssensor 10 erfasst. Vorzugsweise wird bei diesem Messvorgang eine nicht zerstörende Methode angewandt, indem beispielsweise die Fahrzeugtür 2 mit dem Aufprall eines Pendels beaufschlagt wird, während sich die Scheibe 2.1 in unterschiedlichen Positionen 2a, 2b befindet. Abgesehen von dem völlig geschlossenen Zustand 2a der Scheibe 2.1 und dem völlig geöffneten Zustand 2b können auch beliebige Zwischenpositionen messtechnisch erfasst werden. Aus dieser Messreihe lässt sich eine funktionale Abhängigkeit des Ausgangssignals des Drucksensors 11 von der Position Pos der Scheibe 2.1 in Gestalt eines Korrekturwerts K ableiten. Diese funktionale Abhängigkeit wird in einem zweiten Schritt 41 in Form einer Kennlinie 15 oder in Form von diskreten Kennwerten in dem Funktionsmodul 12 abgelegt.

Eine zweite Betriebsphase des Rückhaltesystems 1, die dem Fahrbetrieb des Fahrzeugs entspricht, wird im Folgenden unter Bezug auf das in Figur 5 dargestellte Ablaufdiagramm erläutert. Während des Fahrbetriebs überwacht der Drucksensor 11 den Druck im Inneren der Tür 2. Der Positionssensor 10 erfasst die Position Pos der Scheibe 2.1. In einem Schritt 50 erfasst der Drucksensor 11 einen plötzlichen starken Druckanstieg im Bereich der Fahrzeugtür 2. In dem folgenden Schritt 50 wird anhand des Ausgangssignals des Positionssensors 10 festgestellt, ob die Scheibe 2.1 geöffnet ist oder nicht. Ist die Scheibe 2.1 geschlossen, wird zu dem Schritt 51a verzweigt, der zu dem Schritt 54 führt. Dies bedeutet, dass das Ausgangssignal des Drucksensors unverändert dem Steuergerät 13 zugeführt wird, das dann entscheidet, ob ein Seitenaufprall stattfindet und ggf. Rückhaltemittel 14 zum Schutz der Insassen aktiviert. Wird dagegen in dem Schritt 51 festgestellt, dass die Scheibe 2.1 geöffnet ist, wird zu dem Schritt 51b verzweigt, der zu dem Schritt 52 führt. In dem Schritt 52 wird die genaue Position Pos der Scheibe 2.1 abgefragt, die von dem Positionssensor 10 ermittelt worden ist. In dem Schritt 53 wird ein in dem Funktionsmodul 12 abgelegter Korrekturwert K abgefragt, der dieser Position Pos der Scheibe 2.1 zugeordnet ist. Das mit diesem Korrekturwert K verknüpfte Drucksignal des Drucksensors 11 wird sodann in dem Schritt 54 dem Steuergerät 13 zugeleitet, das wiederum zu entscheiden hat, ob ein gefährlicher Seitenaufprall stattfindet und ob demzufolge Rückhaltemittel 14 zu aktivieren sind. Ist bei einem Seitenaufprall die Position Pos der Scheibe 2.1 bekannt, so kann das Drucksignal des Drucksensors 11 somit erfindungsgemäß im Crashfall durch Korrekturwerte K korrigiert werden, bevor das Signal in dem Steuergerät 13 weiter verarbeitet wird. Dies hat insbesondere den Vorteil, dass bei der Applikation die Möglichkeit einer durch die Position Pos der Scheibe 2.1 hervorgerufenen Signalverringerung nicht mehr durch eine zusätzliche Amplitudentoleranz für das Signal des Drucksensors 11 berücksichtigt werden muss. Daher kann einerseits eine genauere Applikation erfolgen, während andererseits die Auslösezeiten auch im Feld garantiert bleiben, da ein geöffnetes Fenster 2 nicht mehr zu einer Verzögerung bei der Auslösung führt. Bei dem zuvor beschriebenen Ausführungsbeispiel der Erfindung wurde im wesentlichen darauf abgehoben, die Amplitude des Ausgangssignals des Drucksensors 11 in Abhängigkeit von der Position Pos der Scheibe 2 anzupassen, um den direkten Einfluss auf eine Druckschwelle zu korrigieren. In weiteren Ausführungsvarianten der Erfindung können zusätzlich auch andere Größen bei einem Korrekturwert K berücksichtigt werden, die sich ggf. mit der Position Pos der Scheibe 2.1 ändern. Insbesondere kann dies die Halbwertsbreite des Drucksignals des Drucksensors 11 sein. Anstelle einer in dem Funktionsmodul 12 abgelegten Kennlinie 15 kann auch ein mehrdimensionales Kennfeld Anwendung finden, in dem beispielsweise auch noch die Umgebungstemperatur als Korrekturwert für das Drucksignal des Drucksensors 11 berücksichtigt wird.

Gegebenenfalls erweist es sich als zweckmäßig, die eingangs beschriebene Lernphase, etwa im Rahmen vorgeschriebener Wartungsintervalle für das Fahrzeug, zu wiederholen, da sich, alterungsbedingt, abweichende Korrekturwerte einstellen können.

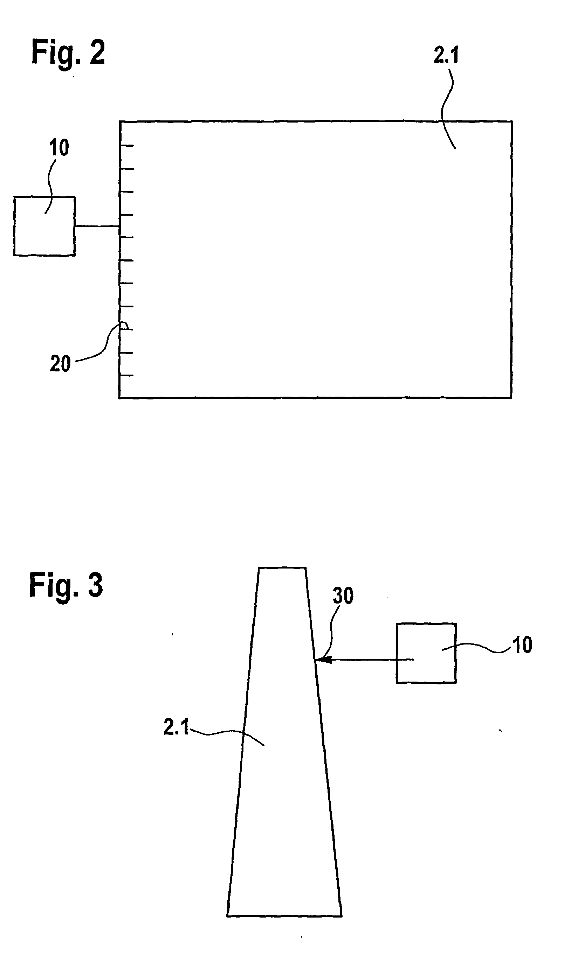

Im Folgenden werden, unter Bezug auf die Figuren 2 und 3 besonders zweckmäßige Ausführungsvarianten von Positionssensoren 10 beschrieben. Figur 2 zeigt eine erste Ausführungsvariante, bei der die Scheibe 2.1 an wenigstens einem Rand eine Skala 20 oder Markierungen trägt, die von dem Positionssensor 10 lesbar ist. Die Skala 20 kann entweder auf die Scheibe 2.1 aufgeklebt, in das Glas der Scheibe 2.1 eingeätzt oder mittels eines lithografischen Verfahrens hergestellt sein. Die Skala 20 kann linear oder logarithmisch sein. Das Ablesen der Skala 20 durch den Positionssensor 10 kann absolut oder inkremental erfolgen. Bei der Detektion der absoluten Position der Scheibe 2.1 kann auf bewährte Prinzipien zurückgegriffen werden. So kann beispielsweise der Positionssensor 10 über optische Abtastmittel für das Ablesen der Skala 20 verfügen. Weiterhin ist jedoch auch ein Positionssensor mit induktiven oder kapazitiven Abtastmitteln für die Skala 20 einsetzbar, wenn die Skala 20 entsprechend ausgebildet ist. In einer weiteren Ausführungsvariante, die anhand von Figur 3 näher erläutert wird, kann die Position der Scheibe 2.1 über eine Dickenmessung der Scheibe 2.1 erfolgen. Dazu ist, wie der Blick auf eine Seitenkante der Scheibe 2.1 in Figur 3 zeigt, die Scheibe 2.1 wenigstens in einem Randbereich keilförmig ausgebildet. Eine bestimmte Dicke der Scheibe 2.1 ist auf diese Weise eindeutig einem bestimmten Abstand von der unteren oder oberen Kante der Scheibe 2.1 zugeordnet. Durch Messung der Dicke der Scheibe kann daher die genaue Position Pos der Scheibe 2.1 ermittelt werden. Um die Dicke der Scheibe 2.1 zu bestimmen , kann der Positionssensor 10 beispielsweise über ein mechanisches Tastelement 30 verfügen, das in dem keilförmigen Bereich der Scheibe 2.1 auf der Oberfläche der Scheibe 2.1 aufliegt und je nach Dicke der Scheibe mehr oder weniger ausgelenkt wird. Die Auslenkung wird dann von dem Positionssensor 10 zweckmäßig in ein entsprechendes elektrisches Signal umgesetzt. In weiteren Varianten kann die Dicke der Scheibe mittels eines Ultraschallsensors oder mit interferometrischen Mitteln abgetastet werden.

In einer noch einfacheren Ausführungsvariante kann auch der Bewegungsablauf eines elektrischen Fensterhebers für die Positionsbestimmung der Scheibe 2.1 ausgenutzt werden. Eine hinreichend genaue Positionsbestimmung der Position Pos der Scheibe 2.1 ist in der Regel nach einem einmaligen Kalibriervorgang möglich, bei dem zum Beispiel Umdrehungen eines Antriebsteils des elektrischen Fensterhebers der Position der Scheibe 2.1 zugeordnet werden.

### Bezugszeichenliste

- 1: Rückhaltesystem
- 2: Fahrzeugtür
- 2.1: Scheibe
- 2a: Position
- 2b: Position
- 10: Positionssensor
- 11: Drucksensor
- 12: Funktionsmodul
- 13: Steuergerät
- 14: Rückhaltemittel
- 15: Kennlinie
- 20: Skala
- 30: Tastelement
- 40: Schritt
- 41: Schritt
- 50: Schritt
- 51: Schritt
- 52: Schritt
- 53: Schritt
- 54: Schritt
- K: Korrekturwert
- Pos: Position

## Patentansprüche

1. Rückhaltsystem (1) für Fahrzeuginsassen mit Rückhaltemitteln (14), mit einem Steuergerät (13) für die Steuerung der Rückhaltemittel (14), sowie mit wenigstens einem in einem peripheren Bereich (2) eines Fahrzeugs angeordneten Drucksensor (11), **dadurch gekennzeichnet, dass** das Rückhaltesystem (1) weiterhin wenigstens einen Positionssensor (10) für die Messung der Position (Pos) wenigstens eines beweglichen Teils (2.1) des Fahrzeugs umfasst, wobei das Ausgangssignal des Positionssensors (10) mit dem Ausgangssignal des Drucksensors (11) verknüpfbar ist.

2. Rückhaltesystem nach Anspruch 1, **dadurch gekennzeichnet, dass** das Rückhaltesystem (1) ein Funktionsmodul (12) umfasst, in dem von der Position des beweglichen Teils (2.1) abhängige Korrekturwerte (K) abgelegt sind.

3. Rückhaltesystem nach einem der vorhergehenden Ansprüche, **dadurch gekennzeichnet, dass** das bewegliche Teil eine in der Fahrzeugtür (2) angeordnete Scheibe (2.1) ist, und dass der Positionssensor (10) in der Fahrzeugtür (2) angeordnet ist.

4. Rückhaltesystem nach einem der vorhergehenden Ansprüche, **dadurch gekennzeichnet, dass** die Scheibe (2.1), vorzugsweise in einem Randbereich, mit einer Skala (20) versehen ist.

5. Rückhaltesystem nach einem der vorhergehenden Ansprüche, **dadurch gekennzeichnet, dass** die Skala (20) auf die Scheibe (2.1) aufgeklebt ist.

6. Rückhaltesystem nach einem der vorhergehenden Ansprüche, **dadurch gekennzeichnet, dass** die Skala (20) in die Scheibe (2.1) eingeätzt ist.

7. Rückhaltesystem nach einem der vorhergehenden Ansprüche, **dadurch gekennzeichnet, dass** die Skala (20) derart ausgebildet ist, dass sie mit optischen Mitteln (10) abtastbar ist.

8. Rückhaltesystem nach einem der vorhergehenden Ansprüche, **dadurch gekennzeichnet, dass** die Skala (20) derart ausgebildet ist, dass sie mit induktiven oder kapazitiven Mitteln (10) abtastbar ist.

9. Rückhaltesystem nach einem der vorhergehenden Ansprüche, **dadurch gekennzeichnet, dass** die Scheibe (2.1) wenigstens in einem Randbereich derart keilförmig ausgebildet ist, dass ein Dickenwert der Scheibe (2.1) eindeutig einem definierten Abstand von einer Unter- oder Oberkante der Scheibe (2.1) zuordenbar ist.

10. Rückhaltesystem nach einem der vorhergehenden Ansprüche, **dadurch gekennzeichnet, dass** der Positionssensor (10) Mittel für die Messung der Dicke der Scheibe (2.1) umfasst.

11. Rückhaltesystem nach einem der vorhergehenden Ansprüche, **dadurch gekennzeichnet, dass** der Positionssensor (10) ein Tastelement (30) für die Abtastung der Dicke der Scheibe (2.1) umfasst.

12. Rückhaltesystem nach einem der vorhergehenden Ansprüche, **dadurch gekennzeichnet, dass** der Positionssensor (10) optische oder akustische Mittel für die Erfassung der Dicke der Scheibe (2.1) umfasst.

13. Verfahren für den Betrieb eines Rückhaltesystems nach einem der vorhergehenden Ansprüche, **dadurch gekennzeichnet, dass** in einer ersten Betriebsphase von einem Drucksensor (11) von der Position eines beweglichen Teils (2.1) des Fahrzeugs abhängige Druckwerte erfasst werden, dass diesen Druckwerten Korrekturwerte (K) zugeordnet werden, dass die Korrekturwerte (K) in einem Funktionsmodul (12) abgelegt werden, und dass in einer zweiten Betriebsphase von dem Drucksensor (11) erfasste Druckwerte mit den in dem Funktionsmodul (12) abgelegten Korrekturwerten (K) verknüpft werden.

## Claims

1. Restraint system (1) for vehicle occupants having restraining means (14), having a control device (13) for controlling the restraining means (14) and having at least one pressure sensor (11) which is arranged in a peripheral area (2) of a vehicle, **characterized in that** the restraint system (1) also comprises at least one position sensor (10) for measuring the position (Pos) of at least one movable part (2.1) of the vehicle, wherein the output signal of the position sensor (10) can be logically combined with the output signal of the pressure sensor (11).

2. Restraint system according to Claim 1, **characterized in that** the restraint system (1) comprises a functional module (12) in which correction values (K) which are dependent on the position of the movable part (2.1) are stored.

3. Restraint system according to one of the preceding claims, **characterized in that** the movable part is a window pane (2.1) which is arranged in the vehicle door (2), and **in that** the position sensor (10) is arranged in the vehicle door (2).

4. Restraint system according to one of the preceding claims, **characterized in that** the window pane (2.1) is provided with a scale (20), preferably in an edge region.

5. Restraint system according to one of the preceding claims, **characterized in that** the scale (20) is bonded onto the window pane (2.1).

6. Restraint system according to one of the preceding claims, **characterized in that** the scale (20) is etched into the window pane (2.1).

7. Restraint system according to one of the preceding claims, **characterized in that** the scale (20) is embodied in such a way that it can be scanned with optical means (10).

8. Restraint system according to one of the preceding claims, **characterized in that** the scale (20) is embodied in such a way that it can be scanned with inductive or capacitive means (10).

9. Restraint system according to one of the preceding claims, **characterized in that** the window pane (2.1) is embodied in an edge region with such a wedge shape that a thickness value of the window pane (2.1) can be clearly assigned to a defined distance from a lower edge or upper edge of the window pane (2.1).

10. Restraint system according to one of the preceding claims, **characterized in that** the position sensor (10) comprises means for measuring the thickness of the window pane (2.1).

11. Restraint system according to one of the preceding claims, **characterized in that** the position sensor (10) comprises a probe element (30) for scanning the thickness of the window pane (2.1).

12. Restraint system according to one of the preceding claims, **characterized in that** the position sensor (10) comprises optical or acoustic means for sensing the thickness of the window pane (2.1).

13. Method for operating a restraint system according to one of the preceding claims, **characterized in that** in a first operating phase a pressure sensor (11) acquires pressure values which are dependent on the position of a movable part (2.1) of the vehicle, **in that** correction values (K) are assigned to these pressure values, **in that** the correction values (K) are stored in a functional module (12), and **in that** in a second operating phase pressure values which are acquired by the pressure sensor (11) are logically combined with the correction values (K) which are stored in the functional module (12).

## Revendications

1. Système de retenue (1) pour les occupants d'un véhicule comportant des moyens de retenue (14), un appareil de commande (13) pour commander les moyens de retenue (14) ainsi qu'au moins un capteur de pression (11) installé dans une zone périphérique (2) du véhicule,
**caractérisé en ce que**
le système de retenue (1) comporte au moins un capteur de position (10) pour mesurer la position (POS) d'au moins une pièce mobile (2.1) du véhicule,
le signal de sortie du capteur de position (10) étant combiné au signal de sortie du capteur de pression (11).

2. Système de retenue selon la revendication 1,
**caractérisé en ce qu'**
il comprend un module fonctionnel (12) dans lequel sont enregistrées des valeurs de correction (K) dépendant de la position de la pièce mobile (2.1).

3. Système de retenue selon l'une des revendications précédentes,
**caractérisé en ce que**
la partie mobile est une vitre (2.1) de portière de véhicule (2), et le capteur de position (10) est installé dans la portière (2) de véhicule.

4. Système de retenue selon l'une quelconque des revendications précédentes,
**caractérisé en ce que**
la vitre (2.1) est munie d'une échelle (20) de préférence dans une zone marginale.

5. Système de retenue selon l'une quelconque des revendications précédentes,
**caractérisé en ce que**
l'échelle (20) est collée sur la vitre (2.1).

6. Système de retenue selon l'une des revendications précédentes,
**caractérisé en ce que**
l'échelle (20) est gravée dans la vitre (2.1).

7. Système de retenue selon l'une quelconque des revendications précédentes,
**caractérisé en ce que**
l'échelle (20) est réalisée pour être détectée par des moyens optiques (10).

8. Système de retenue selon l'une quelconque des revendications précédentes,
**caractérisé en ce que**
l'échelle (20) est détectable par des moyens inductifs ou capacitifs (10).

9. Système de retenue selon l'une quelconque des revendications précédentes,
**caractérisé en ce que**
la vitre (2.1) présente une forme de coin au moins dans une zone marginale et l'épaisseur de la vitre (2.1) est associée de façon univoque à une distance définie par rapport au bord inférieur ou au bord supérieur de la vitre (2.1).

10. Système de retenue selon l'une quelconque des revendications précédentes,
**caractérisé en ce que**
le capteur de position (10) comporte des moyens pour mesurer l'épaisseur de la vitre (2.1).

11. Système de retenue selon l'une quelconque des revendications précédentes,
**caractérisé en ce que**
le capteur de position (10) comporte un élément de détection (30) pour détecter l'épaisseur de la vitre (2.1).

12. Système de retenue selon l'une quelconque des revendications précédentes,
**caractérisé en ce que**
le capteur de position (10) comprend des moyens optiques ou acoustiques pour détecter l'épaisseur de la vitre (2.1).

13. Procédé de gestion d'un système de retenue selon l'une des revendications précédentes,
**caractérisé en ce que**
dans une première phase de fonctionnement, un capteur de pression (11) saisit des valeurs de pression dépendant de la position d'une pièce mobile (2.1) du véhicule,
des valeurs de correction (K) sont associées à ces valeurs de pression,
les valeurs de correction (K) sont enregistrées dans un module fonctionnel (12), et
dans une seconde phase de fonctionnement, les valeurs de pression captées par le capteur de pression (11) sont combinées aux valeurs de correction (K) enregistrées dans le module fonctionnel (12).
